# EUROPÄISCHE PATENTSCHRIFT

(11) **EP 1 607 643 B1**
(45) Veröffentlichungstag und Bekanntmachung des Hinweises auf die Patenterteilung: **01.12.2010**
(21) Anmeldenummer: 05012409.8
(22) Anmeldetag: 09.06.2005
(51) Int. Cl.: F16C 3/035

(54) **Welle und Antriebsstrang eines Kraftfahrzeugs mit der Welle**
Shaft and drive train of a vehicle provided with said shaft
Arbre et arbre de puissance d'un véhicule équipé d'un tel arbre

(30) Priorität: 14.06.2004 DE 102004028409
(43) Veröffentlichungstag der Anmeldung: 21.12.2005
(73) Patentinhaber: AB SKF, 415 50 Göteborg (SE)
(72) Erfinder: Bauer, Bernhard, 97437 Hassfurt (DE); Gebauer, Horst, 97529 Sulzheim (DE); Edelmann, Ludwig, 97717 Sulzthal (DE); Genheimer, Christian, 97204 Höchberg (DE); Brosig, Burkhard, 97502 Euerbach (DE)
(74) Vertreter: Kohl, Thomas

(56) Entgegenhaltungen:
- EP-A2- 0 281 723
- DE-A1- 2 705 331

## Beschreibung

Die Erfindung betrifft eine Welle und einen Antriebsstrang eines Kraftfahrzeugs mit der Welle.

Aus der DE 27 05 331 ist eine Keilwelle mit einem Längsnuten aufweisenden Innenteil, der mit einem ihm umgebenden Außenteil drehfest und axial beweglich über Rollkörper verbunden ist, bekannt, wobei die Rollkörper als Laufrollen ausgebildet sind, die auf Laufflächen des einen Teils laufen und auf in dem anderen Teil gehaltenen Bolzen gelagert sind. Dabei sind in einer Ausführungsform die Laufrollen in ihrer radialen Richtung einstellbar gehalten.

Weiterhin ist es insbesondere bei Nutzfahrzeugen bekannt, für eine optimale Stellung deren Antriebsräder zur Fahrbahn in deren Antriebsstrang bzw. Gelenkwelle einen linearen Längenausgleich vorzusehen. Dabei wird dieser Längenausgleich mittels einer auf Gleitlagerung beruhenden Vielkeilwelle realisiert.

Eine Aufgabe der Erfindung ist es, eine verbesserte Welle zu schaffen, die insbesondere über ihre gesamte Lebensdauer mit einer gleichbleibend hohen Genauigkeit betreibbar ist.

Die Aufgabe wird durch den Gegenstand des Patentanspruchs 1 gelöst. Vorteilhafte Ausgestaltungen sind in den Unteransprüchen beschrieben.

Gemäß Anspruch 1 beinhaltet eine Welle folgende Merkmale:
- ein Innenteil, das mit einem das Innenteil wenigstens teilweise umschließenden Außenteil drehfest und axial beweglich über Wälzkörper, die einen im wesentlichen zylinderförmigen Außenmantel aufweisen, verbunden ist und
- Einstellmittel zum automatischen Einstellen einer Spielfreiheit zwischen Innen- und Außenteil, wobei die Einstellmittel Federmittel umfassen, die derart angeordnet sind, dass sie außerhalb eines zwischen Innen- und Außenteil drehmomentübertragenden Pfades liegen.

Damit werden gegenüber vergleichbaren gleitenden Keilwellen die dort in Folge der Gleitlagerung auftretenden vergleichsweise hohen Reibkräfte, ein damit einhergehender hoher Verschleiß und ein sich dabei nach einer gewissen Laufzeit einstellendes Spiel verhindert, in dem die Reibkräfte aufgrund der Wälzlagerung um ein vielfaches reduziert sind. Weiterhin wird aufgrund besagter Mittel ein sich trotz des geringen Verschleiß einstellendes Spiel zwischen Innen- und Außenteil automatisch ausgeglichen, so dass über die komplette Lebensdauer aufgrund der Selbstregulierung kein Spiel vorhanden ist. Dadurch, dass die Wälzkörper im wesentlichen nadelartig oder zylinderrollenartig ausgebildet sind, sind insbesondere gegenüber Lösungen mit Kugeln als Wälzkörpern auch große Drehmomente sicher übertragbar. Dadurch, dass die Federmittel außerhalb eines zwischen Innen- und Außenteil drehmomentübertragenden Pfades liegen, werden die Federmittel durch die großen, bei der Drehmomentübertragung auftretenden Kräfte nicht belastet, wodurch auch ihre Lebensdauer nicht derart herabgesetzt wird, dass sie für das Gesamtbauteil Welle als limitierender Faktor berücksichtigt werden müssten.

Weitere Vorteile, Merkmale und Einzelheiten der Erfindung ergeben sich aus den nachfolgend beschriebenen Ausführungsbeispielen der Erfindung anhand der Figuren. Dabei zeigen:
- Figur 1: in perspektivischer Ansicht eine Keilwelle,
- Figur 2: einen Ausschnitt der im vorderen Bereich quergeschnittenen Keilwelle der Figur 1,
- Figur 3: ausschnittsweise einen Querschnitt durch eine weitere Keilwelle und
- Figur 4: in perspektivischer Ansicht eine Welle.

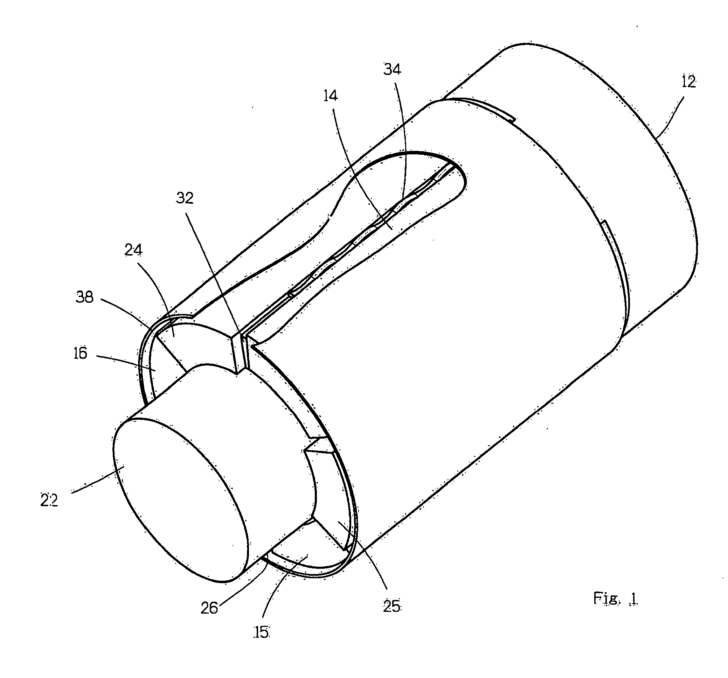

Die Figur 1 zeigt als ein Ausführungsbeispiel der Erfindung eine Keilwelle in perspektivischer Ansicht. Die Keilwelle umfasst dabei einen Innenteil, das mit einem das Innenteil wenigstens teilweise umschließenden Außenteil drehfest und axial beweglich über Wälzkörper 42 verbunden ist. Das Außenteil umfasst dabei einen zylinderartigen Bereich 12, an dem sich drei in Umfangsrichtung verteilt angeordnete längliche Elemente 14, 15 und 16 mit im wesentlichen kreisringsegmentartigen Querschnitt anschließen. Das Innenteil umfasst einen inneren Zylinder 22, an dessen Außenmantel sich drei in Umfangsrichtung verteilt angeordnete längliche Elemente 24, 25 und 26 mit im wesentlichen kreisringsegmentartigen Querschnitt anschließen, die in die Lücken zwischen den Elementen 14, 15 und 16 des Außenteils passen.

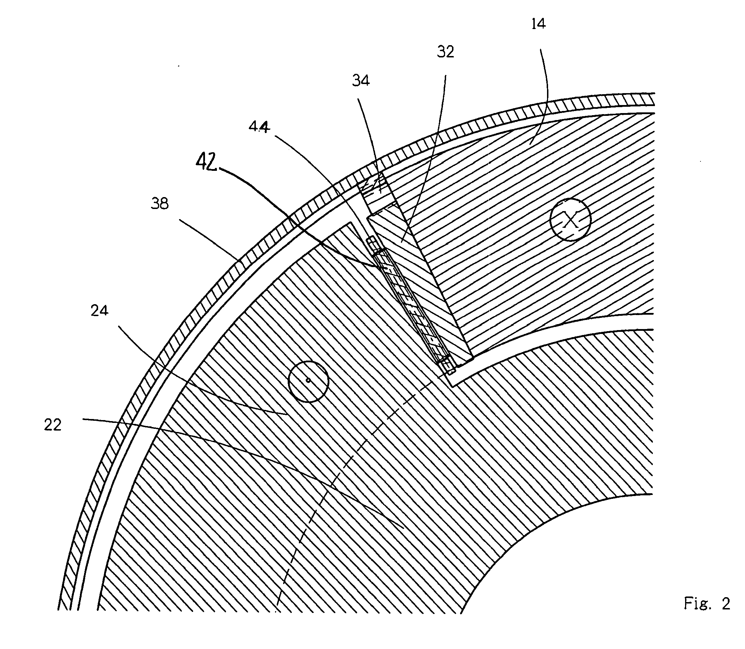

Zwischen den im wesentlichen planen sich einander gegenüberliegenden Seitenflächen der Elemente 14, 15, 16, 24, 25 und 26 sind die Wälzkörper 42 sowie Mittel zum automatischen Einstellen einer Spielfreiheit zwischen Innen- und Außenteil angeordnet. Dazu zeigt die Figur 2 einen Ausschnitt der im vorderen Bereich quergeschnittenen Keilwelle der Figur 1 in einem Bereich zwischen dem Element 24 des Innenteils und dem Element 14 des Außenteils. Dabei erkennt man, dass die Mittel zum automatischen Einstellen einer Spielfreiheit ein länglich ausgebildetes Keilelement 32 mit einer in etwa keilartigen Querschnittsfläche und ein in Längsrichtung schlangenartige ausgebildetes Federelement 34 umfassen, wobei sich das Federelement 34 gegen eine die Elemente 14, 15, 16, 24, 25 und 26 umschließende Hülse 38 abstützt. Zwischen dem Keilelement 32 und dem Element 24 des Innenteils sind die um eine radial gerichtete Achse drehbar gelagerten nadelartigen, in einem Käfig 44 geführten Wälzkörper 42 angeordnet. Dadurch, dass das Federelement 34 das Keilelement 32 immer nach innen gedrückt hält, wird mit Vorteil für die gesamte Lebensdauer der Keilwelle verschleißunabhängig die Spielfreiheit von Innen- zu Außenteil sichergestellt.

Zwischen dem in der Figur 2 dargestellten Element 14 des Außenteils und dem nächsten sich in Uhrzeigerrichtung anschließenden Element 25 des Innenteils sind wenigstens Wälzkörper entsprechend dem vorausgehend Beschriebenen angeordnet. Die Zwischenräume der übrigen Elemente 15 und 16 des Außenteils hin zu den an sie angrenzenden Elementen 24, 25 und 26 des Innenteils sind entsprechend dem vorausgehend Beschriebenen ausgebildet.

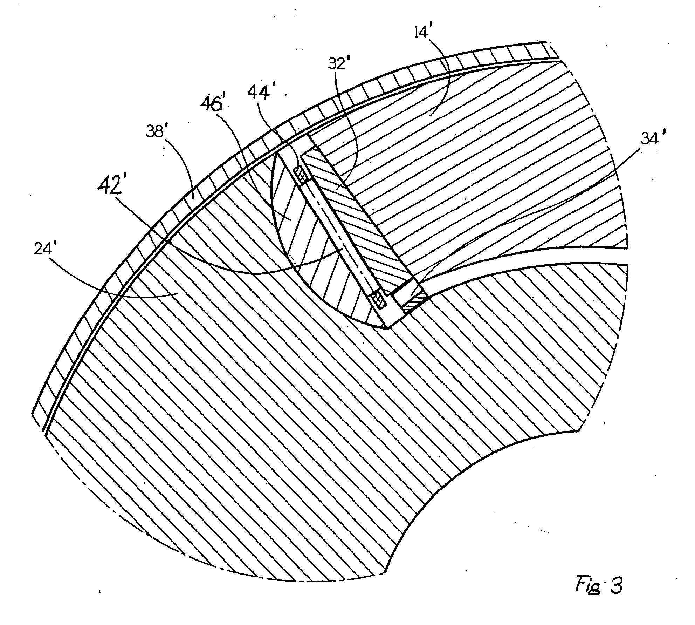

Die Figur 3 zeigt als ein weiteres Ausführungsbeispiel der Erfindung einen der Figur 2 ähnlichen ausschnittsweisen Querschnitt durch eine Keilwelle, die sich von der Keilwelle der Figuren 1 und 2 insbesondere dadurch unterscheidet, dass das Keilelement 32' sich nach außen hin verjüngend in der Keilwelle angeordnet ist, das Federelement 34' im Bestreben, das Keilelement 32' nach außen zu drücken, zwischen dem Keilelement 32' und dem Innenteil der Keilwelle angeordnet ist und eine Laufbahn der Wälzkörper 42' am Außenteil durch eine Einlegeplatte 46' realisiert ist, die entsprechend in das Außenteil eingesetzt ist. Ansonsten gilt das vorausgehend zu der Keilwelle der Figuren 1 und 2 Beschriebene entsprechend, wobei in der Figur 3 Bauelemente, die denen der Figuren 1 und 2 entsprechen, mit gleichen, um einen Hochstrich ergänzten Bezugszeichennummern bezeichnet sind. Dadurch, dass das Keilelement 32' sich nach innen hin verdickend und das Federelement 34' innen am Keilelement 32' ansetzend angeordnet ist, wird beim Rotieren der Welle mit Vorteil infolge der auf das Keilelement 32' wirkenden Zentrifugalkraft das Keilelement 32' ohne Gegenwirkung des Federelements 34' nach außen gedrückt und somit die Keilwelle spielfrei gehalten. Damit trägt das Federelement 34' insbesondere bei Stillstand und niedrigen Umdrehungszahlen der Keilwelle zum Sicherstellen besagte Spielfreiheit der Keilwelle bei.

Durch die Laufbahnplatte 46' bzw. die damit zusammenhängende geometrische Ausbildung ist mit Vorteil ein Toleranzausgleich im System der Keilwelle möglich. Darüber hinaus wird durch die Laufbahnplatte 46' eine Schränkung der Wälzkörper verhindert und gegenüber einer Lösung ohne Laufbahnplatte eine Kostenersparnis erzielt, da beispielsweise die Laufbahnplatte 46' aus einem Profil gezogen werden kann und auch das übrige Außenteil kostengünstiger herstellbar ist, da es keine an Laufbahnen zu stellenden Anforderungen erfüllen muss.

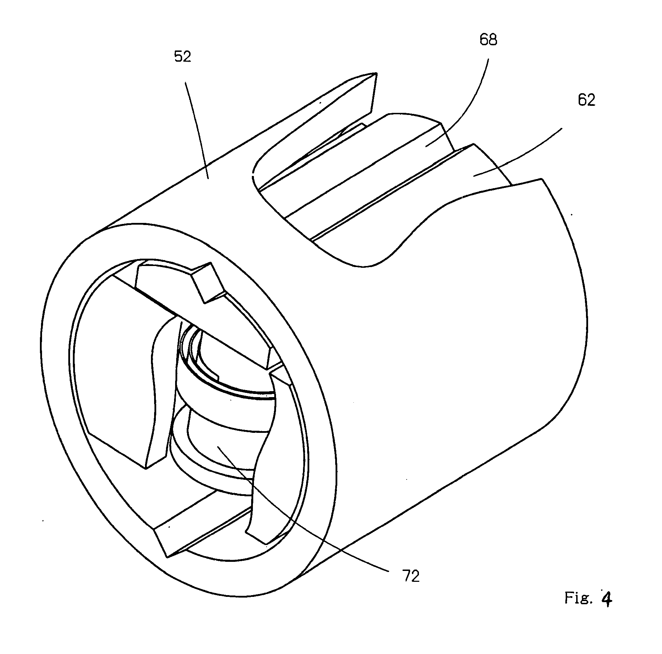

Die Figur 4 zeigt als ein weiteres Ausführungsbeispiel der Erfindung eine Welle in perspektivischer Ansicht. Die Welle umfasst dabei ein Innenteil, das mit einem das Innenteil umschließenden hohlzylinderartigen Außenteil 52 drehfest und axial beweglich über Wälzkörper verbunden ist. Das Innenteil umfasst dabei ein oberes Laufbahnelement 62 und ein entsprechendes unteres aus Gründen der Übersichtlichkeit nicht dargestelltes Laufbahnelement, wobei die Laufbahnelemente 62 in Längsrichtung eine keilartige Nut aufweisen, die zusammen mit entsprechenden Nuten des Außenteils 52 Räume 68 und die Laufbahnen für die in der Figur 4 aus Gründen der Übersichtlichkeit ebenfalls nicht dargestellten Wälzkörper bilden, die beispielsweise in Kreuzrollentechnik ausgebildet sind. Das Innenteil umfasst weiterhin die beiden Laufbahnelemente 62 miteinander verbindende Federelemente 72, die die beiden Laufbahnelemente 62 derart auseinander drücken, dass hierüber eine Spielfreiheit zwischen dem Innenteil und dem Außenteil 52 automatisch eingestellt wird. In anderen Ausführungen können natürlich auch wieder in die Nuten entsprechend einlegbare Laufbahnplatten zum Einsatz kommen.

Vorausgehend beschriebene Ausführungsbeispiele der Erfindung sind Bestandteil eines Antriebsstrangs eines Nutzfahrzeugs. Die beschriebene Welle bzw. Keilwelle ist aber auch in anderen Anwendungsgebieten, beispielsweise bei Werkzeugmaschinenantrieben einsetzbar.

### Bezugszeichenliste

- 12: Bereich des Außenteils
- 14, 14', 15, 16: Element des Außenteils

- 22: innerer Zylinder des Innenteils
- 24, 24' 25, 26: Element des Innenteils

- 32, 32': Keilelement
- 34, 34': Federelement
- 38, 38': Hülse

- 42, 42': Wälzkörper
- 44, 44': Käfig
- 46': Laufbahnplatte

- 52: Außenteil
- 62: Laufbahnelement
- 68: Raum für Wälzkörper
- 72: Federelement

## Patentansprüche

1. Welle, beinhaltend folgende Merkmale:
- ein Innenteil, das mit einem das Innenteil wenigstens teilweise umschließenden Außenteil drehfest und axial beweglich über Wälzkörper, die einen im wesentlichen zylinderförmigen Außenmantel aufweisen, verbunden ist und
- Einstellmittel zum automatischen Einstellen einer Spielfreiheit zwischen Innen- und Außenteil, wobei die Einstellmittel Federmittel umfassen, die derart angeordnet sind, dass sie außerhalb eines zwischen Innen- und Außenteil drehmomentübertragenden Pfades liegen.

2. Welle nach Anspruch 1, wobei die Einstellmittel ein länglich ausgebildetes Keilelement mit in etwa keilartiger Querschnittsfläche umfassen.

3. Welle nach Anspruch 2, wobei das Keilelement derart angeordnet ist, dass eine seiner Seitenflächen eine Laufbahn für die Wälzkörper bildet.

4. Welle nach einem der Ansprüche 2 oder 3, wobei das Keilelement derart angeordnet ist, dass es mit einer seiner Seitenflächen an einem der Teile anliegt.

5. Welle nach einem der Ansprüche 2 bis 4, wobei die Federmittel auf das Keilelement wirkend angeordnet sind.

6. Welle nach einem der Ansprüche 2 bis 5, wobei das Keilelement sich keilartig in Richtung auf die Wellenmitte zu verjüngend angeordnet ist und die Federmittel am radial äußeren Ende des Keilelements ansetzend angeordnet sind.

7. Welle nach Anspruch 6, wobei die Federmittel gegen eine das Außenteil im wesentlichen umschließende hülsenartige Vorrichtung abgestützt sind.

8. Welle nach einem der Ansprüche 2 bis 5, wobei das Keilelement sich keilartig in Richtung von der Wellenmitte weg verjüngend angeordnet ist und die Federmittel am radial inneren Ende des Keilelements ansetzend angeordnet sind.

9. Welle nach einem der Ansprüche 1 bis 8, wobei das Außenteil in einer Umfangsrichtung verteilt angeordnete, längliche Elemente mit im wesentlichen kreisringsegmentartigen Querschnitts umfasst, und das Innenteil in die Lücken zwischen den Elementen des Außenteils eingreifende, längliche Elemente mit im wesentlichen kreisringsegmentartigen Querschnitt umfasst.

10. Welle nach Anspruch 9, wobei zwischen einer der im wesentlichen planen Seitenflächen wenigstens eines Elements des Innenteils und einer ihr gegenüberliegenden im wesentlichen planen Seitenfläche eines Elements des Außenteils die Wälzkörper und/oder das Keilelement angeordnet sind.

11. Welle nach einem der Ansprüche 1 bis 10, wobei die Wälzkörper nadelartig oder zylinderrollenartig ausgebildet sind.

12. Welle nach einem der Ansprüche 1 bis 11, wobei die Wälzkörper derart angeordnet sind, dass ihre Hauptachsen im wesentlichen senkrecht zur Wellenachse verlaufen.

13. Welle nach Anspruch 1, wobei das Innenteil wenigstens ein erstes und ein zweites Element umfasst, jedes der Elemente mit wenigstens einer Laufbahn für eine Reihe von Wälzkörpern ausgebildet ist und zwischen den beiden Elementen die Federmittel angeordnet sind, so dass die Elemente voneinander weggedrückt werden.

14. Welle nach Anspruch 13, wobei zum Bilden der Laufbahn das Innen- und Außenteil mit einer entsprechenden Vertiefung ausgebildet sind.

15. Welle nach einem der Ansprüche 13 oder 14, wobei die Wälzkörper in Kreuzrollentechnik ausgebildet sind.

16. Welle nach einem der Ansprüche 1 bis 15, wobei die Wälzkörper in einem Käfig geführt sind.

17. Welle nach einem der Ansprüche 1 bis 16, wobei zum Bilden einer Laufbahn für die Wälzkörper wenigstens eines der Teile eine in das Teil einlegbare Laufbahnplatte umfasst.

18. Welle nach Anspruch 17, wobei die Laufbahnplatte an ihrer zum Anliegen am Teil vorgesehenen Seite ausgebaucht und das Teil dementsprechend eingebaucht ausgebildet ist.

19. Welle nach einem der Ansprüche 1 bis 18, wobei die Welle derart ausgebildet ist, dass die Wälzkörper entlang geradliniger Bahnen abrollen.

20. Welle nach einem der Ansprüche 1 bis 19, wobei das Außenteil wenigstens einen im wesentlichen hohlzylinderartigen Bereich umfasst, in dessen Höhlung wenigstens ein Bereich des Innenteils bewegbar ist.

21. Antriebsstrang eines Kraftfahrzeugs mit einer Welle nach einem der Ansprüche 1 bis 20.

## Claims

1. Shaft, containing the following features:
- an inner part which is connected to an outer part which encloses the inner part at least partially, in a fixed manner so as to rotate with it and such that it can be moved axially via rolling bodies which have a substantially cylindrical outer shell, and
- setting means for automatically setting a freedom from play between the inner part and the outer part, the setting means comprising spring means which are arranged in such a way that they lie outside a path which transmits torque between the inner part and the outer part.

2. Shaft according to Claim 1, the setting means comprising a wedge element of elongate configuration with an approximately wedge-shaped cross-sectional face.

3. Shaft according to Claim 2, the wedge element being arranged in such a way that one of its side faces forms a raceway for the rolling bodies.

4. Shaft according to either of Claims 2 and 3, the wedge element being arranged in such a way that it bears with one of its side faces against one of the parts.

5. Shaft according to one of Claims 2 to 4, the spring means being arranged such that they act on the wedge element.

6. Shaft according to one of Claims 2 to 5, the wedge element being arranged such that it tapers in a wedge-like manner in the direction of the shaft centre, and the spring means being arranged such that they act on the radially outer end of the wedge element.

7. Shaft according to Claim 6, the spring means being supported against a sleeve-like apparatus which encloses the outer part substantially.

8. Shaft according to one of Claims 2 to 5, the wedge element being arranged such that it tapers in a wedge-like manner in the direction away from the shaft centre, and the spring means being arranged such that they act on the radially inner end of the wedge element.

9. Shaft according to one of Claims 1 to 8, the outer part comprising elongate elements which are arranged distributed in a circumferential direction and have a substantially circularly annular segment-like cross section, and the inner part comprising elongate elements which engage into the gaps between the elements of the outer part and have a substantially circularly annular segment-like cross section.

10. Shaft according to Claim 9, the rolling bodies and/or the wedge element being arranged between one of the substantially planar side faces of at least one element of the inner part and a substantially planar side face of an element of the outer part, which side face lies opposite the former side face.

11. Shaft according to one of Claims 1 to 10, the rolling bodies being configured in the manner of needles or cylindrical rollers.

12. Shaft according to one of Claims 1 to 11, the rolling bodies being arranged in such a way that their main axes extend substantially perpendicularly with respect to the shaft axis.

13. Shaft according to Claim 1, the inner part comprising at least one first and one second element, each of the elements being configured with at least one raceway for a row of rolling bodies, and the spring means being arranged between the two elements, with the result that the elements are pressed away from one another.

14. Shaft according to Claim 13, the inner part and the outer part being configured with a corresponding depression in order to form the raceway.

15. Shaft according to either of Claims 13 and 14, the rolling bodies being configured using the cross-roller technology.

16. Shaft according to one of Claims 1 to 15, the rolling bodies being guided in a cage.

17. Shaft according to one of Claims 1 to 16, at least one of the parts comprising a raceway plate which can be inserted into the part in order to form a raceway for the rolling bodies.

18. Shaft according to Claim 17, the raceway plate having a bulge on its side which is provided for bearing against the part, and the part being configured correspondingly with an indentation.

19. Shaft according to one of Claims 1 to 18, the shaft being configured in such a way that the rolling bodies roll along rectilinear tracks.

20. Shaft according to one of Claims 1 to 19, the outer part comprising at least one substantially hollow-cylindrical region, in the cavity of which at least one region of the inner part can be moved.

21. Drive train of a motor vehicle having a shaft according to one of Claims 1 to 20.

## Revendications

1. Arbre, comportant les caractéristiques suivantes:
- une partie intérieure, qui est assemblée avec une partie extérieure entourant au moins partiellement la partie intérieure, de façon solidaire en rotation et mobile axialement au moyen de corps de roulement, qui présentent une enveloppe extérieure essentiellement cylindrique, et
- des moyens de réglage pour le réglage automatique d'une liberté de jeu entre la partie intérieure et la partie extérieure, dans lequel les moyens de réglage comprennent des moyens de ressort, qui sont disposés de telle manière qu'ils soient situés à l'extérieur d'un chemin de transmission de couple de rotation entre la partie intérieure et la partie extérieure.

2. Arbre selon la revendication 1, dans lequel les moyens de réglage comprennent un élément de coin allongé avec une surface de section transversale en forme de coin.

3. Arbre selon la revendication 2, dans lequel l'élément de coin est disposé de telle manière qu'une de ses faces latérales forme une piste de roulement pour les corps de roulement.

4. Arbre selon l'une quelconque des revendications 2 ou 3, dans lequel l'élément de coin est disposé de telle manière qu'il repose par une de ses faces latérales sur une des parties.

5. Arbre selon l'une quelconque des revendications 2 à 4, dans lequel les moyens de ressort sont disposés de façon à agir sur l'élément de coin.

6. Arbre selon l'une quelconque des revendications 2 à 5, dans lequel l'élément de coin est disposé de façon à se rétrécir en forme de coin en direction du milieu de l'arbre et les moyens de ressort sont disposés de façon appliquée sur l'extrémité radialement extérieure de l'élément de coin.

7. Arbre selon la revendication 6, dans lequel les moyens de ressort prennent appui contre un dispositif en forme de manchon entourant essentiellement la partie extérieure.

8. Arbre selon l'une quelconque des revendications 2 à 5, dans lequel l'élément de coin est disposé de façon à se rétrécir en forme de coin dans la direction opposée au milieu de l'arbre et les moyens de ressort sont disposés de façon appliquée sur l'extrémité radialement intérieure de l'élément de coin.

9. Arbre selon l'une quelconque des revendications 1 à 8, dans lequel la partie extérieure comprend des éléments allongés, de section transversale essentiellement en forme de segment de couronne circulaire, répartis dans une direction périphérique, et la partie intérieure comprend des éléments allongés, avec une section transversale essentiellement en forme de segments de couronne circulaire, s'engageant dans les espaces entre les éléments de la partie extérieure.

10. Arbre selon la revendication 9, dans lequel les corps de roulement et/ou les éléments de coin sont agencés entre une des faces latérales essentiellement
planes d'au moins un élément de la partie intérieure et une face latérale essentiellement plane opposée d'un élément de la partie extérieure.

11. Arbre selon l'une quelconque des revendications 1 à 10, dans lequel les corps de roulement sont réalisés en forme d'aiguilles ou de rouleaux cylindriques.

12. Arbre selon l'une quelconque des revendications 1 à 11, dans lequel les corps de roulement sont disposés de telle manière que leurs axes principaux soient essentiellement perpendiculaires à l'axe de l'arbre.

13. Arbre selon la revendication 1, dans lequel la partie intérieure comprend un premier et un deuxième éléments, chacun des éléments étant doté d'au moins une piste de roulement pour une série de corps de roulement et les moyens de ressort sont disposés entre les deux éléments, de telle manière que les éléments soient écartés l'un de l'autre.

14. Arbre selon la revendication 13, dans lequel la partie intérieure et la partie extérieure sont dotées d'un creux correspondant pour former la piste de roulement.

15. Arbre selon l'une quelconque des revendications 13 ou 14, dans lequel les corps de roulement sont réalisés selon la technique des rouleaux croisés.

16. Arbre selon l'une quelconque des revendications 1 à 15, dans lequel les corps de roulement sont guidés dans une cage.

17. Arbre selon l'une quelconque des revendications 1 à 16, dans lequel au moins une des parties comprend une plaque de piste de roulement à poser dans la pièce pour former une piste de roulement pour les corps de roulement.

18. Arbre selon la revendication 17, dans lequel la plaque de piste de roulement est renflée sur son côté prévu pour être appliquée sur la partie et la partie est creusée de façon correspondante.

19. Arbre selon l'une quelconque des revendications 1 à 18, dans lequel l'arbre est réalisé de telle manière que les corps de roulement roulent le long de pistes droites.

20. Arbre selon l'une quelconque des revendications 1 à 19, dans lequel la partie extérieure comporte au moins une zone essentiellement cylindrique creuse, dans la cavité de laquelle au moins une zone de la partie intérieure est mobile.

21. Ligne de transmission d'un véhicule automobile avec un arbre selon l'une quelconque des revendications 1 à 20.
